# DEMANDE DE BREVET EUROPEEN

(11) **EP 2 066 069 A1**
(43) Date de publication de la demande: **03.06.2009**
(21) Numéro de dépôt: 07121610.5
(22) Date de dépôt: 27.11.2007
(51) Int. Cl.: H04L 9/08

(54) **Méthode d'enregistrement et de restitution d'un contenu chiffré par une unité de traitement**

(71) Demandeur: Nagravision S.A., 1033 Cheseaux-sur-Lausanne (CH)
(72) Inventeur: Burckard, Antoine, 78180, Montigny le Bretonneux (FR); Robyr, Sébastien, 1066, Epalinges (CH)
(74) Mandataire: Leman Consulting S.A.

(57) **Abrégé**

Méthode d'exploitation par une seconde unité de traitement STBb d'un contenu enregistré par une première unité de traitement STBa, lesdites première et seconde unités de traitement STBa, STBb possédant chacune une clé propre (Ka, Kb) étant gérées par un serveur central CS. Les unités de traitement STBa, STBb ont accès à une mémoire de stockage amovible destinée à enregistrer le contenu chiffré par une clé de contenu CK et également un fichier associé audit contenu. La clé de contenu CK est produite par déchiffrement en cascade à partir de la clé propre Ka de la première unité STBa d'au moins deux constantes (C1, C2) fournies par le serveur central CS et d'une variable R. Le contenu est restitué par la seconde unité de traitement STBb par déchiffrement en cascade à partir de la clé propre Kb de la seconde unité STBb en utilisant les constantes (C1, C2) et la variable R stockées dans le fichier accompagnant le contenu et une clé de transcodage TK calculée par le serveur central CS.

## Description

### Domaine technique

La présente invention concerne le domaine des unités de traitement de données numériques chiffrées de contenus audio/vidéo. Ces unités sont mises en oeuvre dans différents équipements multimédia comme par exemple des ordinateurs personnels, des équipements mobiles ou des décodeurs de télévision numérique à péage. Elles sont associées généralement à des mémoires de stockage amovibles
ou externes telles que disques durs, disques optiques, cartes, modules ou tout autre type de mémoire de masse destinées à enregistrer des contenus dans le but de les reproduire ultérieurement.

### Art antérieur

Le stockage et la reproduction à volonté de contenus ouvre la possibilité d'usage abusif de ces contenus qui sont généralement protégés par des droits d'auteur. De nombreux moyens de protection et de contrôle de la reproduction des contenus ont alors été développés comme le montre les exemples ci-dessous.

Le document EP1169856B1 décrit une méthode d'accès à un contenu encrypté. Ce dernier est protégé dans un réseau local par le rechiffrement de la clé nécessaire à la décryption du contenu. Une première unité reçoit et stocke les données de contenu encryptées et chiffre la clé de décryption des données avec une clé propre à cette première unité. Les données et la clé chiffrée sont transmises à une seconde unité appartenant au réseau pour leur décryption. Selon une variante, la clé associée à la première unité est une clé publique dont la clé privée correspondante se trouve dans la seconde unité.

Le document US7181624 décrit un dispositif d'enregistrement et de reproduction de données numériques diffusée dans un flux de transport. Le dispositif joint des données temporelles indiquant l'heure d'arrivée à chaque paquet de donnée inclus dans le flux de transport. Une clé de bloc est générée pour encrypter un bloc de données incluant plusieurs paquets de transport accompagnés chacun des données temporelles d'arrivée des paquets. Cette clé, créée à partir d'un bloc racine comprenant des informations additionnelles unique au bloc incluant les données temporelles d'arrivée, encrypte chaque bloc de données. Les données numériques ainsi encryptées sont enregistrées dans la mémoire du dispositif. La reproduction des données s'effectue selon un processus de décryption inverse à celui de l'encryption lors de l'enregistrement.

Le document US2004010467 décrit une carte mémoire pour équipement mobile comprenant une zone mémoire destinée à stocker des données de contenu encryptées, une zone pour stocker des informations de licence transmise par un système de distribution, une pluralité de zones pour stocker des données d'authentification authentifiées par des clés publiques communes avec le système de distribution. En réponse à une requête de distribution provenant de l'équipement mobile un serveur de licences vérifie l'authenticité de la carte mémoire et distribue le contenu encrypté et la licence correspondante à l'équipement mobile. Un contenu encrypté reçu par un premier équipement mobile peut être transféré vers un second équipement mobile qui pourra l'exploiter seulement si la licence correspondante a été acquise. Le second équipement devra donc obtenir, auprès du système de distribution qui vérifiera la conformité de la carte mémoire, la licence comprenant une clé de décryption du contenu.

### Description sommaire de l'invention

Le but de la présente invention est de fournir une amélioration de la protection contre les copies abusives des contenus enregistrés dans une mémoire de stockage pouvant être transférée d'une unité de traitement vers une autre.

Ce but est atteint par une méthode d'exploitation par une seconde unité de traitement d'un contenu enregistré par une première unité de traitement, lesdites première et seconde unités de traitement possédant chacune une clé propre étant gérées par un serveur central, les unités de traitement ayant accès à une mémoire de stockage amovible destinée à enregistrer le contenu chiffré par une clé de contenu et également des données associées audit contenu, la clé de contenu étant produite selon les étape a à d ou d' suivantes:
a) déchiffrement par la clé propre de la première unité de traitement, d'une première constante fournie par le serveur central pour l'obtention d'une première clé locale,
b) déchiffrement d'une seconde constante fournie par le serveur central avec la première clé locale, obtention d'une clé intermédiaire,
c) obtention par l'unité de traitement d'une variable,
d) chiffrement du contenu avec une clé de contenu obtenue en déchiffrant la variable avec la clé intermédiaire, stockage du contenu chiffré, des constantes et de la variable dans la mémoire de stockage,
ou d') chiffrement du contenu avec une clé de contenu égale à la variable, stockage du contenu chiffré, des constantes et de la variable chiffrée avec la clé intermédiaire dans la mémoire de stockage,
la méthode est caractérisée en ce que le contenu chiffré avec la clé de contenu produite selon les étapes a, b, c et d ou d' est restitué par la seconde unité de traitement, les étapes suivantes étant préalablement effectuées par le serveur central:
1) obtention de la première clé locale par le serveur central, cette clé étant telle que chiffrée par la clé propre à la première unité de traitement on obtienne la première constante,
2) obtention d'une seconde clé locale par le serveur central, cette clé étant telle que chiffrée par la clé propre à la seconde unité de traitement on obtienne la première constante,
3) calcul d'une clé de transcodage par le déchiffrement de la seconde constante par la première clé locale puis par le chiffrement du résultat par la seconde clé locale,
4) envoi de la clé de transcodage à la seconde unité de traitement, et selon les étapes suivantes effectuées par la seconde unité de traitement,
   A) déchiffrement par la clé propre de la seconde unité de traitement, de la première constante fournie pour l'obtention de la seconde clé locale,
   B) déchiffrement de la clé de transcodage avec la seconde clé locale, pour l'obtention de la clé intermédiaire,
   C) déchiffrement de la variable par la clé intermédiaire pour obtenir la clé de contenu,
   D) déchiffrement du contenu avec la clé de contenu et restitution de ce contenu par la seconde unité de traitement.

La méthode présente l'avantage essentiel de ne pas exposer les clés propres aux unités de traitement par leur transmission vers le serveur central ou leur stockage dans les mémoires amovibles. Les clés, les constantes et les variables utilisées lors du chiffrement et du déchiffrement du contenu dérivent des clés propres des unités et leur connaissance ne permet pas de retrouver ces clés propres. Seules les unités concernées et connues du serveur central peuvent exploiter ces données associées au contenu pour les opérations de chiffrement / déchiffrement lors de l'enregistrement et la restitution du contenu.

Les opérations des étapes a, b, c, d ou d' de production de la clé de contenu CK lors de l'enregistrement du contenu par la première unité et les opérations des étapes A à C d'obtention de la clé de contenu lors de la restitution du contenu par la seconde unité sont effectuées de préférence par les chipsets respectifs de la première et de la seconde unité. Un chipset est un ensemble de circuits électroniques permettant au processeur de gérer les échanges de données entre les divers composants de l'unité. L'exécution de ces opérations au niveau des chipsets des unités vise à empêcher toute attaque matérielle consistant à analyser les signaux échangés afin de découvrir les clés propres des unités qui les utilisent. De ce fait, la clé propre, la clé locale et la clé intermédiaire ne sont pas accessibles à l'extérieur du chipset. Le module de chiffrement / déchiffrement sera également situé dans le même chipset pour que la clé de contenu ne soit pas non plus accessible de l'extérieur.

Il est à noter que les opérations de déchiffrement des étapes a), b) et d) lors de l'enregistrement du contenu, de déchiffrement / chiffrement lors du calcul de la clé de transcodage et de déchiffrement des étapes A), B) et C) lors de la restitution du contenu peuvent être remplacées par des opérations de chiffrement respectivement de chiffrement / déchiffrement.

### Brève description des figures

L'invention sera mieux comprise grâce à la description détaillée qui va suivre et qui se réfère aux figures annexées données à titre d'exemple nullement limitatif.
- La figure 1 montre une pluralité d'unités de traitement équipées d'une mémoire de stockage de contenu amovible gérées par un serveur central.
- La figure 2 illustre le processus d'enregistrement d'un contenu par une unité de traitement dans lequel le contenu est chiffré par une clé de contenu, dérivée de la clé propre de l'unité de traitement, générée à partir de deux constantes fournies par le serveur central et d'une variable générée localement.
- La figure 3 illustre la création d'une clé de transcodage effectuée par le serveur central.
- La figure 4 illustre le processus de restitution par une seconde unité de traitement d'un contenu chiffré et enregistré par une première unité de traitement dans lequel la clé de contenu est déchiffrée à partir de la constante et la variable utilisée lors de l'enregistrement et de la clé de transcodage créée par le serveur central.

### Description détaillée de l'invention.

La méthode de l'invention s'applique par exemple à des unités de traitement de contenus audio/vidéo telles que des décodeurs (set top box) de programmes de télévision à péage. Chacune de ces unités est en général associée à un module de sécurité. Ce dernier est un dispositif réputé inviolable contenant diverses clés d'encryption/décryption, des informations servant à identifier un utilisateur sur un réseau et des données qui définissent des droits acquis par l'utilisateur pour la réception d'un contenu audio/vidéo diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles ou encore sous forme d'un module de logiciel et/ou matériel logé au sein d'un chipset.

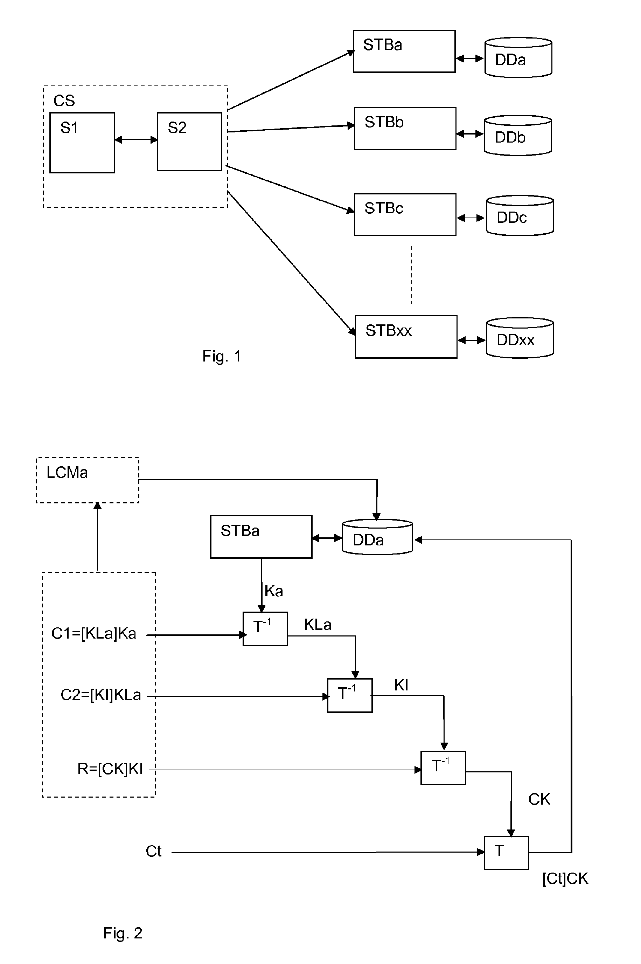

Le schéma de la figure 1 montre des unités gérées par un serveur central (head end) qui sont de préférence équipées de supports de stockage externes telles que des disques durs amovibles et/ou disques optiques, des mémoires non volatiles du type flash ou autre permettant d'enregistrer des contenus de programmes et de les restituer ultérieurement. Grâce à l'interchangeabilité des supports de stockage, un contenu enregistré par une unité donnée peut être reproduit par une autre unité gérée par le même serveur. Bien entendu, un contenu enregistré par une unité peut aussi être restitué par celle-ci. Les opérations d'enregistrement et de reproduction de contenus sont contrôlées par le serveur central qui fournit les paramètres et les clés nécessaires au chiffrement / déchiffrement des contenus.

Une unité de traitement peut également consister en un ordinateur personnel portable ou fixe équipé d'un module de sécurité interne ou externe. Le module de sécurité externe se présente par exemple sous la forme d'une carte à puce insérée dans un lecteur ou sous la forme d'une clé électronique (dongle) connectée à l'ordinateur par le biais de l'interface série USB (Universal Serial Bus) ou de toute autre interface offerte par l'ordinateur. Le ou les unités sont gérées par un serveur central et ont un accès à des supports de stockage amovibles comme des disques durs et/ou disques optiques, des mémoires non volatiles du type flash ou autre, aptes à enregistrer un contenu chiffré destiné à être restitué par la même ou une unité différente de celle ayant enregistré le contenu.

Selon un exemple de configuration, le serveur central comprend un serveur primaire S1 dans lequel les clés uniques (Ka, Kb,...Kxx) des unités (STBa, STBb,..., STBxx) sont générées puis stockées et un serveur secondaire S2 chargé de calculer les clés et fournir les fichiers de clés nécessaires au déchiffrement d'un contenu enregistré par une unité. Lors de la première connexion d'une unité au serveur central CS pendant son installation, le serveur primaire S1 fournit à cette unité une clé unique qu'elle stocke dans une mémoire particulière inscriptible une seule fois. Le serveur secondaire S2 ne possède en principe pas les clés uniques des unités, mais seulement des clés dérivées de celles-ci.

Le contenu enregistré dans la mémoire de l'unité de traitement est chiffré par une clé de contenu CK résultant d'un déchiffrement successif de deux paramètres fournis par le serveur central CS représentés par deux constantes C1 et C2 et d'une variable R générée localement par l'unité de traitement. Le schéma figure 2 montre les différentes étapes de déchiffrement exécutées pour obtenir une clé CK servant à chiffrer le contenu Ct.

Dans une première étape, la constante C1 est déchiffrée par une clé Ka unique propre à l'unité de traitement STBa afin d'obtenir une clé locale KLa. La clé Ka unique et invariable est stockée dans une mémoire morte du chipset de l'unité et inaccessible de l'extérieur du chipset de l'unité. Le déchiffrement est représenté dans les figures 2, 3 et 4 par un bloc portant le symbole T⁻¹ et le chiffrement par un bloc muni du symbole T. Le chiffrement / déchiffrement est effectué de préférence par l'utilisation d'un algorithme à clés symétriques du type DES (Data Encryption Standard), TDES (Triple DES), IDEA (International Data Encryption Algorithm), AES (Advanced Encryption System), etc.

Selon une variante, chaque unité inclut une paire de clé asymétriques dont la clé publique sert à déchiffrer la première constante C1 et la clé privée correspondante étant stockée dans le chipset de l'unité. La clé publique pouvant être également connue du serveur central en référence à la variante 1) ci-dessous.

La clé locale KLa obtenue à la première étape est utilisée ensuite pour déchiffrer la seconde constante C2 afin d'obtenir une clé intermédiaire KI. Cette dernière clé KI est utilisée dans une dernière étape pour déchiffrer la variable R et obtenir la clé de contenu CK. Du fait de l'utilisation d'une variable R, la clé de contenu CK sera différente à chaque enregistrement d'un contenu, et une clé de contenu ne pourra pas être déduite à partir d'une clé obtenue lors d'un enregistrement précédent. De plus, la clé de contenu CK dépend ou dérive de la clé propre Ka de l'unité STBa car elle résulte d'un déchiffrement en cascade de paramètres subséquents (C2, R) à l'aide de clés résultant d'un déchiffrement d'un paramètre initial C1 effectué avec ladite clé propre Ka.

Le contenu est stocké dans l'unité de stockage DDa sous forme chiffrée avec la clé CK et accompagné d'un fichier LCMa contenant les constantes C1 et C2 et la variable R. Ce fichier LCMa peut être chiffré par une clé issue du module de sécurité associé à l'unité STBa.

Selon une option, la clé de contenu CK est égale à la variable R et le fichier LCMa contient la variable R chiffrée avec la clé intermédiaire KI de sorte que pour déterminer la variable R à la restitution du contenu, la clé intermédiaire KI devient nécessaire.

L'étape d) de la méthode décrite plus haut est alors remplacée par l'étape d' de chiffrement du contenu par la variable R qui est égale à la clé de contenu CK, et de stockage du contenu chiffré, des constantes C1 et C2 et de la variable R chiffrée avec la clé intermédiaire KI dans la mémoire de stockage.

Selon une variante, un ou plusieurs niveaux additionnels de déchiffrement de constantes ou de variables supplémentaires peuvent être inséré entre les étapes b) et c) du processus de création de la clé de contenu CK. La clé intermédiaire KI' finale ainsi obtenue est définie comme étant dérivée de la première clé KI issue du déchiffrement de la seconde constante C2. Toutes les constantes et variables supplémentaires sont stockées dans le fichier LCMa qui sera utilisé lors de la restitution du contenu.

La variable R est de préférence sous la forme d'un nombre aléatoire généré par l'unité de traitement. Elle peut également figurer sous forme d'un nombre que l'unité extrait à partir d'une liste stockée dans une mémoire.

Selon une variante, la variable R peut être soit générée, soit extraite d'une liste stockée par le serveur central CS et mise à disposition de l'unité de traitement STBa.

Dans les deux variantes, une valeur différente de la variable R est fournie à chaque enregistrement d'un contenu par une unité, que la variable R soit générée aléatoirement ou prise de la liste.

Lorsque le contenu chiffré est restitué par la même unité STBa qui l'a enregistré, le procédé de détermination de la clé de contenu CK est identique à celui mis en oeuvre lors de l'enregistrement grâce au fichier LCMa contenant les paramètres (C1, C2, R) requis. En effet, le déchiffrement de la constante C1=[KLa]Ka avec la clé propre Ka de l'unité donne la clé locale KLa qui, utilisée pour déchiffrer la constante C2=[KI]KLa donne la clé intermédiaire KI servant à déchiffrer la variable R=[CK]KI pour donner la clé de contenu CK.

Dans la variante où une ou plusieurs constantes ou variables supplémentaires ont été utilisées lors du processus d'enregistrement, le déchiffrement successif de ces constantes ou variables à partir de la première constante C1 avec la clé propre Ka de l'unité STBa donne la clé intermédiaire finale KI'. Cette dernière sera utilisée pour déchiffrer la variable R ou successivement les variables pour obtenir la clé de contenu CK.

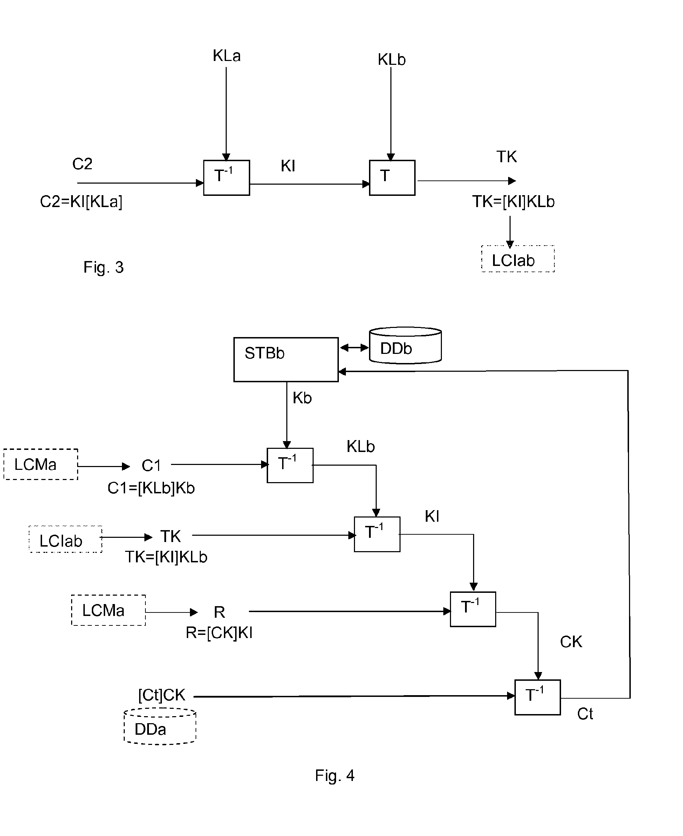

Lorsque le contenu chiffré est restitué par une unité STBb différente de celle qui l'a enregistré, le procédé de détermination de la clé de contenu CK devient plus complexe du fait de la dépendance de la clé de contenu CK de la clé propre de l'unité qui l'a déterminée. Dans l'exemple de la figure 4, un contenu est enregistré par une première unité de traitement STBa puis transféré vers une seconde unité STBb gérée par le même serveur CS que la première unité STBa.

Le procédé de restitution par la seconde unité STBb nécessite la création par le serveur central CS d'une clé de transcodage TK qui sera transmise à cette seconde unité STBb de destination du contenu chiffré. Deux variantes peuvent être envisagées:
1) Les clés propres Ka, Kb...Kxx des unités sont connues par le serveur central CS ou plus précisément par le serveur secondaire S2.
   Selon cette première variante, le serveur central calcule la clé locale KLa de la première unité STBa en déchiffrant la première constante C1 avec la clé propre Ka de la première unité STBa.
   Le serveur central calcule ensuite la clé locale KLb de la seconde unité STBb en déchiffrant la même constante C1 avec la clé propre Kb de la seconde unité STBb.
   La clé de transcodage TK est calculée par le déchiffrement de la seconde constante C2=[KI]KLa avec la première clé locale KLa pour obtenir la clé intermédiaire KI qui sera ensuite chiffrée avec la seconde clé locale KLb. La clé de transcodage TK=[KI]KLb ainsi obtenue est transmise à la seconde unité STBb dans un fichier de transfert LCIab.
2) Les clés propres Ka, Kb...Kxx des unités ne sont pas connues par le serveur central CS ou plutôt par le secondaire S2 en tant que telles mais leur clés locales KLa, KIb,...KLxx dérivées sont stockées par ce serveur S2 comme les constantes C1, C2.

Selon cette seconde variante illustrée par la figure 3, le serveur central, ayant à disposition les clés locales KLa et KLb respectivement de la première et de la seconde unité de traitement STBa, STBb, calcule d'abord la clé intermédiaire KI par le déchiffrement de la seconde constante C2=KI[KLa] par la première clé locale KLa. Puis, il calcule la clé de transcodage TK=[KI]KLb en chiffrant cette clé intermédiaire KI avec la seconde clé locale KLb. La clé de transcodage TK=[KI]KLb est transmise à la seconde unité STBb comme dans la première variante par l'intermédiaire du fichier LCIab.

Grâce au fichier LCMa accompagnant le contenu chiffré et contenant la constante C1 et la variable R, la seconde unité STBb déchiffre la première constante C1 avec sa clé propre Kb de manière à obtenir la clé locale KLb correspondante. Le fichier LCIab fournit la clé de transcodage TK=[KI]KLb qui est ensuite déchiffrée avec la clé locale KLb obtenue auparavant. Le résultat donne la clé intermédiaire KI qui est nécessaire pour déchiffrer la variable R=[CK]KI afin d'obtenir la clé de contenu CK permettant à la seconde unité STBb de déchiffrer le contenu pour le restituer en clair.

Un avantage de cette méthode est que dans les deux variantes les clés uniques propres aux unités de traitement ne sont pas transmises lors de l'enregistrement ou de la restitution sur une unité quelconque dépendant d'un même serveur central. Elles ne sont pas non plus stockées dans les fichiers accompagnant les données de contenus chiffrées.

La seconde variante peut être préférée car elle offre un niveau de sécurité plus élevé du fait que les clés uniques (Ka, Kb) propres à chaque unité de traitement (STBa, STBb) ne sont pas stockées dans le serveur secondaire S2 sous leur forme originale comme dans les chipsets respectifs de chaque unité (STBa, STBb). Par contre, le serveur stocke les clés locales (KLa, KLb) de chaque unité qui sont telles que chiffrées par les clés (Ka, Kb) propres aux unités de traitement (STBa, STBb) correspondantes on obtienne la première constante C1. Dans l'exemple illustré par les figures 2 et 4, la constante C1 est égale à [KLa]Ka et à [KLb]Kb.

Les opérations de calcul de la clé de contenu CK lors de sa restitution par la seconde unité STBb sont également effectuées par le chipset de cette unité.

Dans la variante où une ou plusieurs constantes ou variables supplémentaires ont été utilisées lors du processus d'enregistrement, la clé de transcodage TK est calculée par déchiffrement successif de ces constantes ou variables à partir de la seconde constante C2 avec la clé locale KLa de l'unité STBa pour aboutir à la clé intermédiaire finale KI' qui sera chiffrée avec la clé locale KLb de la seconde unité STBb.

## Revendications

1. Méthode d'exploitation par une seconde unité de traitement STBb d'un contenu enregistré par une première unité de traitement STBa, lesdites première et seconde unités de traitement STBa, STBb possédant chacune une clé propre (Ka, Kb) étant gérées par un serveur central CS, les unités de traitement ayant accès à une mémoire de stockage amovible destinée à enregistrer le contenu chiffré par une clé de contenu CK et également des données associées au dit contenu, la clé de contenu CK étant produite selon les étapes a à d ou d' suivantes:
a) déchiffrement par la clé propre Ka de la première unité de traitement STBa, d'une première constante C1 fournie par le serveur central CS pour l'obtention d'une première clé locale KLa,
b) déchiffrement d'une seconde constante C2 fournie par le serveur central CS avec la première clé locale KLa, obtention d'une clé intermédiaire KI,
c) obtention par l'unité de traitement STBa d'une variable R,
d) chiffrement du contenu avec une clé de contenu CK obtenue en déchiffrant la variable R avec la clé intermédiaire KI, stockage du contenu chiffré, des constantes C1 et C2 et de la variable R dans la mémoire de stockage,
ou d') chiffrement du contenu avec une clé de contenu CK égale à la variable R, stockage du contenu chiffré, des constantes C1 et C2 et de la variable R chiffrée avec la clé intermédiaire KI dans la mémoire de stockage,
la méthode est **caractérisée en ce que** le contenu chiffré avec la clé de contenu CK produite selon les étapes a, b, c et d ou d' est restitué par la seconde unité de traitement STBb, les étapes suivantes étant préalablement effectuées par le serveur central:
1) obtention de la première clé locale KLa par le serveur central, cette clé KLa étant telle que chiffrée par la clé Ka propre à la première unité de traitement STBa on obtienne la première constante C1
2) obtention d'une seconde clé locale KLb par le serveur central, cette clé KLb étant telle que chiffrée par la clé Kb propre à la seconde unité de traitement STBb on obtienne la première constante C1,
3) calcul d'une clé de transcodage TK par le déchiffrement de la seconde constante C2 par la première clé locale KLa puis par le chiffrement du résultat par la seconde clé locale KLb,
4) envoi de la clé de transcodage TK à la seconde unité de traitement STBb, et selon les étapes suivantes effectuées par la seconde unité de traitement,
A) déchiffrement par la clé propre Kb de la seconde unité de traitement STBb, de la première constante C1 fournie pour l'obtention de la seconde clé locale KLb,
B) déchiffrement de la clé de transcodage TK avec la seconde clé locale KLb, pour l'obtention de la clé intermédiaire KI,
C) déchiffrement de la variable R par la clé intermédiaire KI pour obtenir la clé de contenu CK,
D) déchiffrement du contenu avec la clé de contenu CK et restitution de ce contenu par la seconde unité de traitement STBb.

2. Méthode selon la revendication 1 **caractérisée en ce que** les clés propres (Ka, Kb) des unités de traitement (STBa, STBb) sont stockées dans le serveur central, les clés locales KLa et KLb étant obtenues par le serveur central par les étapes suivantes:
1') calcul de la première clé locale KLa en déchiffrant la première constante C1 avec la clé propre Ka de la première unité STBa,
2') calcul de la seconde clé locale KLb en déchiffrant la première constante C1 avec la clé propre Kb de la seconde unité STBb.

3. Méthode selon la revendication 1 **caractérisée en ce que** la variable R est un nombre aléatoire généré par l'unité de traitement.

4. Méthode selon la revendication 1 **caractérisée en ce que** la variable R est un nombre extrait d'une liste stockée par l'unité de traitement.

5. Méthode selon la revendication 1 **caractérisée en ce que** la variable R est un nombre aléatoire généré par le serveur central et mis à disposition de l'unité de traitement STBa.

6. Méthode selon la revendication 1 **caractérisée en ce que** la variable R est un nombre extrait d'une liste stockée par le serveur central et mis à disposition de l'unité de traitement STBa.

7. Méthode selon les revendications 1 à 6 **caractérisée en ce que** la variable R prend une valeur différente lors de chaque enregistrement d'un contenu par l'unité de traitement STBa.

8. Méthode selon la revendication 1, **caractérisée en ce qu'**entre les étapes b et c, on ajoute au moins une dérivation supplémentaire de la clé intermédiaire KI par le déchiffrement d'au moins une constante ou une variable supplémentaire par la clé intermédiaire KI pour obtenir une clé intermédiaire dérivée KI' et **en ce qu'**à l'étape 3 la clé de transcodage TK est calculée par déchiffrement d'au moins une constante
ou variable supplémentaire à partir de la seconde constante C2 avec la clé locale KLa de l'unité STBa pour aboutir à la clé intermédiaire finale KI', ladite clé intermédiaire finale KI' étant chiffrée par la seconde clé locale KLb.

9. Méthode selon la revendication 1 **caractérisée en ce que** les opérations des étapes a, b, c et d ou d' de production de la clé de contenu CK lors de l'enregistrement du contenu par la première unité STBa et les opérations des étapes A à C d'obtention de la clé de contenu CK lors de la restitution du contenu par la seconde unité STBb sont effectuées par les chipsets respectifs de la première et de la seconde unité.

10. Méthode selon les revendications 1 à 9 **caractérisée en ce que** les opérations de chiffrement / déchiffrement sont effectuées par l'utilisation d'un algorithme à clés symétriques.

11. Méthode selon la revendication 1 **caractérisée en ce que** lors de l'enregistrement, les constantes C1, C2 et la variable R ou les constantes C1, C2 et la variable R chiffrée avec la clé intermédiaire KI sont stockées dans un fichier LCMa accompagnant le contenu chiffré et **en ce que** le serveur central transmet la clé de transcodage TK dans un fichier de transfert LCIab, lesdits fichiers (LCMa, LCIab) étant mis à disposition de la seconde unité STBb lors de la restitution du contenu.

12. Méthode selon la revendication 11 **caractérisée en ce que** le fichier LCMa est chiffré par une clé issue d'un module de sécurité associé à l'unité de traitement.

13. Méthode selon les revendications 1 à 12, **caractérisée en ce que** les unités de traitement sont constituées de décodeurs de télévision à péage (set top box) équipés d'un module de sécurité et gérées par un serveur central, lesdites unités ayant accès à des supports de stockage amovibles aptes à enregistrer un contenu chiffré destiné à être restitué par la même ou une unité différente de celle ayant enregistré le contenu.

14. Méthode selon les revendications 1 à 12, **caractérisée en ce que** les unités de traitement sont constituées d'ordinateurs personnels équipés d'un module de sécurité interne ou externe et gérées par un serveur central, lesdites unités ayant accès à des supports de stockage amovibles aptes à enregistrer un contenu chiffré destiné à être restitué par la même ou une unité différente de celle ayant enregistré le contenu.
